# EUROPÄISCHE PATENTSCHRIFT

(11) **EP 3 126 275 B1**
(45) Veröffentlichungstag und Bekanntmachung des Hinweises auf die Patenterteilung: **04.12.2019**
(21) Anmeldenummer: 15712955.2
(22) Anmeldetag: 31.03.2015
(51) Int. Cl.: B66B 5/18

(54) **AUFZUG MIT EINER BREMSVORRICHTUNG**
ELEVATOR HAVING A BRAKING DEVICE
ASCENSEUR AVEC UN DISPOSITIF DE FREINAGE

(30) Priorität: 04.04.2014 DE 102014104865
(43) Veröffentlichungstag der Anmeldung: 08.02.2017
(73) Patentinhaber: thyssenkrupp Elevator AG, 45143 Essen (DE); thyssenkrupp AG, 45143 Essen (DE)
(72) Erfinder: KUCZERA, Thomas, 70771 Leinfelden-Echterdingen-Stetten (DE); HOFFMANN, Walter, 65527 Niedernhausen (DE)
(74) Vertreter: thyssenkrupp Intellectual Property GmbH
(86) Internationale Anmeldenummer: PCT/EP2015/057074
(87) Internationale Veröffentlichungsnummer: WO 2015/150406

(56) Entgegenhaltungen:
- EP-A1- 0 648 703
- US-A- 4 720 975

## Beschreibung

Die vorliegende Erfindung betrifft einen Aufzug mit einer Bremsvorrichtung, nämlich einer Fangvorrichtung, wobei die Bremsvorrichtung eine hydraulisch wirkende Bremse zum Abbremsen und/oder Halten eines Fahrkorbs des Aufzugs aufweist.

### Stand der Technik

Bei Aufzügen sind Fangvorrichtungen zwingend erforderlich, die beim Auftreten von Übergeschwindigkeiten und/oder unkontrollierten Fahrbewegungen einen Fahrkorb des Aufzugs sicher bis zum Stillstand verzögern.

Bisherige Fangvorrichtungen weisen zu ihrer Auslösung einen mechanischen Geschwindigkeitsbegrenzer, ein Begrenzerseil, eine Umlenkrolle mit Spanngewicht und eine Hebelkonstruktion zwischen dem Begrenzerseil und der Fangvorrichtung auf.

Alternativ kann eine Fangvorrichtung elektrisch ausgelöst werden. Hierzu erfassen Sensoren, wie z.B. Weg- und Beschleunigungssensoren in zweikanaliger Ausführung, eine Übergeschwindigkeit des Fahrkorbs.

Es sind Keilfangvorrichtungen für eine Aufzugsnotbremsung mit einem beweglichen Keil bekannt, der zum Abbremsen mit einer Führungsschiene des Aufzugs in Kontakt bringbar ist. Anstelle einer Keilfangvorrichtung kann eine Bremse mit flachen Bremsbelägen verwendet werden, bei der die Federkraft aus einem Feder- bzw. Tellerfederpaket gewonnen wird, die im normalen Aufzugbetrieb belüftet, d.h. gelöst ist. Aus der EP 0 648 703 A1 ist es bekannt, eine derartige Feder hydraulisch zu belüften (Bremse ist offen). Zur Erzeugung des Hydraulikdrucks ist eine Motorpumpe vorgesehen. Jedoch nimmt die Motorpumpe mit ihren Verbindungsleitungen viel Bauraum in Anspruch; die Bremskraft wird durch eine Feder erzeugt.

Es ist Aufgabe der vorliegenden Erfindung, einen Aufzug mit einer verbesserten Bremsvorrichtung bereitzustellen.

### Offenbarung der Erfindung

Erfindungsgemäß wird ein Aufzug mit einer Bremsvorrichtung nämlich Fangvorrichtung mit einer Bremse und mit einem ein Hydraulikaggregat zum Belüften der Bremse gemäß Anspruch 1 vorgeschlagen. Vorteilhafte Ausgestaltungen sind Gegenstand der Unteransprüche sowie der nachfolgenden Beschreibung.

Der erfindungsgemäße Aufzug weist eine Bremsvorrichtung, nämlich Fangvorrichtung, auf, wobei die Bremsvorrichtung eine hydraulisch wirkende Bremse zum Abbremsen und/oder Halten eines Fahrkorbs des Aufzugs und ein Hydraulikaggregat mit einer Pumpenbaugruppe, einer Bremszylinderbaugruppe und einer Ventilbaugruppe zum Belüften der Bremse aufweist. Das Hydraulikaggregat ist in der Bremsvorrichtung integriert.

### Vorteile der Erfindung

Die Erfindung stellt ein besonders wenig Bauraum in Anspruch nehmendes Bauteil bereit, da das Hydraulikaggregat direkt an der Bremsvorrichtung angebracht bzw. befestigt ist. So kann z.B. auf Bauraum in Anspruch nehmende Hydraulikleitungen verzichtet werden. Dadurch, dass die Pumpenbaugruppe, die Bremszylinderbaugruppe und die Ventilbaugruppe in dem Hydraulikaggregat zusammengefasst sind, wird ferner ein Hydraulikaggregat mit kompakten Abmessungen bereitgestellt. Die Pumpenbaugruppe stellt den für den Betrieb notwenigen Hydraulikdruck zum Offenhalten (Belüften) der Bremse bereit. Somit sind keine separate Pumpenbaugruppe und keine Verbindungsleitungen notwendig. Durch den federnd vorgespannt gelagerten Kolben in dem Zylinder der Bremszylinderbaugruppe wird sichergestellt, dass bei einem Druckverlust in dem Zylinder sich die Feder entspannt und so die Bremse entlüftet (Bremse schließt). Somit ist die Betriebssicherheit bei einfachem und kompaktem Aufbau gesteigert, wobei das zumindest eine Ventil eine erste Kammer des Zylinders hydraulikölfördernd mit dem Hydraulikaggregat verbindet, um die Bremse zu belüften. Durch die kompakten Abmessungen sind die Leitungslängen von Hydraulikölleitungen reduziert, sodass die notwendigen Mindestbetriebsölmenge reduziert ist. Zugleich reduzieren die kompakten Abmessungen die Reaktionszeiten des Hydraulikaggregats sowie dessen Gewicht und dessen Energieverbrauch.

In einer vorteilhaften Ausgestaltung der Erfindung sind die Pumpenbaugruppe, die Bremszylinderbaugruppe und die Ventilbaugruppe in einem gemeinsamen Gehäuse aufgenommen. Das Gehäuse kann als Metallgehäuse oder als Kunststoffspritzgussgehäuse ausgebildet sein. Das Gehäuse kann vollständig oder teilweise geschlossen ausgebildet sein. Ferner kann das Gehäuse einen besonders einfachen Aufbau aufweisen, denn aufgrund der Zusammenfassung der Pumpenbaugruppe, der Bremszylinderbaugruppe und der Ventilbaugruppe zu einer Einheit müssen keine Hydraulikleitungen durch das Gehäuse geführt werden.

Gemäß der Erfindung weist die Bremszylinderbaugruppe einen in einem Zylinder verlagerbaren Kolben auf, wobei der Kolben mittels einer Feder federnd vorgespannt ist. Die Ventilbaugruppe weist zumindest ein Ventil auf, wobei das Ventil in zumindest einem ersten Schaltzustand die Bremse belüftet. Hierzu ist in dem ersten Schaltzustand des Ventils eine erste Kammer des Zylinders hydraulikölfördernd mit der Pumpenbaugruppe verbunden. Die Pumpenbaugruppe stellt den für den Betrieb notwenigen Hydraulikdruck zum Belüften der Bremse bereit. Somit sind keine separate Pumpenbaugruppe und keine Verbindungsleitungen notwendig. Durch den federnd vorgespannt gelagerten Kolben in dem Zylinder der Bremszylinderbaugruppe wird sichergestellt, dass bei einem Druckverlust in dem Zylinder sich die Feder entspannt und so die Bremse entlüftet. Somit ist die Betriebssicherheit bei einfachem und kompaktem Aufbau gesteigert, wobei das zumindest eine Ventil die erste Kammer des Zylinders hydraulikölfördernd mit dem Hydraulikaggregat verbindet, um die Bremse zu belüften.

In einer vorteilhaften Ausgestaltung der Erfindung weist die Bremsvorrichtung einen Grundkörper auf, wobei das Hydraulikaggregat an dem Grundkörper befestigt ist. Hierdurch ist ein besonders einfacher Aufbau ohne zusätzliche Verbindungsmittel zwischen der Bremsvorrichtung und dem Hydraulikaggregat möglich.

In einer vorteilhaften Ausgestaltung der Erfindung weist die Pumpenbaugruppe eine Tauchpumpe auf. Unter einer Tauchpumpe wird dabei eine Pumpe verstanden, die in die zu fördernde Flüssigkeit, z.B. Hydrauliköl, eintaucht. Hierdurch können leistungsfähige Pumpen mit kompakten Abmessungen verwendet werden.

Gemäß der Erfindung teilt der Kolben einen Zylinderinnenraum des Zylinders in eine erste Kammer und eine zweite Kammer, wobei in der zweiten Kammer die Feder aufgenommen ist. Hierdurch wird der Bauraumbedarf nochmals reduziert.

Gemäß der Erfindung ist in einem zweiten Schaltzustand des Ventils die zweite Kammer hydraulikölfördernd mit der Pumpenbaugruppe verbunden. Hierdurch wird erreicht, dass durch Beaufschlagen der zweiten Kammer mit Hydrauliköl ein Hydrauliköldruck auf den Kolben wirkt, um die Bremse aus dem nicht-wirkenden (belüfteten) in den wirkenden (entlüfteten) Schaltzustand zu bringen.

In einer vorteilhaften Ausgestaltung der Erfindung ist das zumindest ein Ventil der Ventilbaugruppe als 3/2-Wegeventil ausgebildet. Somit weist die Ventilbaugruppe einen besonders einfachen Aufbau auf und nimmt nur wenig Bauraum in Anspruch. Es können aber auch andere Ventilarten verwendet werden.

In einer vorteilhaften Ausgestaltung der Erfindung weist die Ventilbaugruppe zumindest zwei Ventile auf, die parallel geschaltet sind. Somit wird eine Redundanz für den Fall bereitgestellt, dass eines der beiden Ventile funktionsunfähig ist, oder die Ansteuerung eines der beiden Ventile defekt ist. Hierdurch kann die Betriebssicherheit gesteigert werden.

In einer vorteilhaften Ausgestaltung der Erfindung weist das Hydraulikaggregat einen geschlossenen Hydraulikölkreislauf auf. Hierdurch weist das Hydraulikaggregat einen besonders einfachen Aufbau auf, und benötigt nur eine geringe Mindestbetriebsölmenge.

In einer vorteilhaften Ausgestaltung der Erfindung ist der Hydraulikkreislauf ausgebildet, aus dem Zylinder der Bremszylinderbaugruppe austretendes Hydrauliköl zu der Pumpenbaugruppe zu leiten. Hierdurch wird erreicht, dass Hydraulikölverluste minimiert sind und somit die Gesamthydraulikölmenge, die zum Betrieb erforderlich ist, reduziert werden kann, da eine Ausgleichmenge zum Ausgleich von Verlusten reduziert werden kann.

Ferner gehört zur Erfindung ein Hydraulikaggregat zum Belüften einer Bremse einer derartigen Bremsvorrichtung.

Weitere Vorteile und Ausgestaltungen der Erfindung ergeben sich aus der Beschreibung und der beiliegenden Zeichnung.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist anhand eines Ausführungsbeispiels in der Zeichnung schematisch dargestellt und wird im Folgenden unter Bezugnahme auf die Zeichnung ausführlich beschrieben.

### Figurenbeschreibung

- Figur 1: zeigt schematisch eine bevorzugte Ausführungsform eines erfindungsgemäßen Aufzugs mit einer Bremsvorrichtung und mit einem Hydraulikaggregat.
- Figur 2: zeigt schematisch eine bevorzugte Ausführungsform eines erfindungsgemäßen Hydraulikaggregats in perspektivischer Ansicht.
- Figur 3: zeigt eine schematische Schnittdarstellung des Hydraulikaggregats gemäß Figur 2, verbunden mit der Bremsvorrichtung.
- Figur 4: zeigt schematisch einen Hydraulikkreislauf des Hydraulikaggregats.

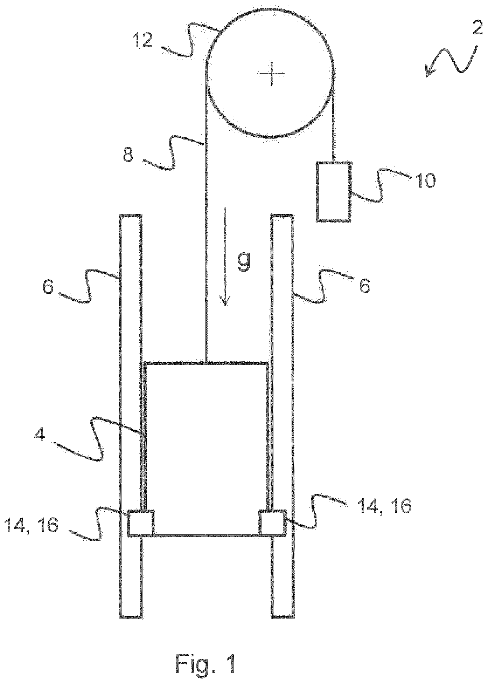

In Figur 1 ist ein Aufzug 2 als eine bevorzugte Ausgestaltung eines erfindungsgemäßen Aufzugsystems schematisch dargestellt.

Der Aufzug 2 weist im vorliegenden Ausführungsbeispiel einen Fahrkorb 4 zum Transport von Personen und/oder Lasten auf, die in oder entgegen der Schwerkraftrichtung g an zwei parallel zueinander verlaufenden Führungsschienen 6 in einem Aufzugschacht verfahrbar gelagert ist. Abweichend von dem vorliegenden Ausführungsbeispiel kann jedoch der Fahrkorb 4 z.B. an einer einzigen Führungsschiene verfahrbar gelagert sein.

Zum Verfahren des Fahrkorbs 4 ist ein Antrieb vorgesehen, der im vorliegenden Ausführungsbeispiel als Treibscheibenantrieb ausgebildet ist. Der Fahrkorb 4 kann dabei eine Kabine und einen Fangrahmen (beides nicht dargestellt) aufweisen. Der Antrieb weist im vorliegenden Ausführungsbeispiel ein Tragseil 8 auf, das am Dach des Fahrkorbs 4 befestigt ist. Das Tragseil 8 läuft über eine Triebscheibe 12, die mittels eines Motors (nicht dargestellt) motorisch antreibbar ist, um den Fahrkorb 4 zu verfahren. An dem anderen, dem Fahrkorb 4 gegenüberliegenden Ende des Tragseils 8, ist ein Gegengewicht 10 vorgesehen, dass durch Gewichtsausgleich den Kraftaufwand zum Verfahren des Fahrkorbs 4 reduziert. Abweichend von dem vorliegenden Ausführungsbeispiel kann der Aufzug als tragmittelloser Aufzug ausgebildet sein. Ein tragmittelloser Aufzug ist ein Aufzugsystem, dass keine Seile oder Gurte verwendet, die über eine Treibscheibe 12 angetrieben werden. Der Antrieb dieser Aufzüge befindet sich direkt auf dem Fahrkorb 4. Beispielsweise werden hier Zahnstangenantriebe und Linearantriebe eingesetzt.

Um den Fahrkorb 4 bis zum Stillstand abzubremsen, wenn Übergeschwindigkeiten und/oder unkontrollierte Fahrbewegungen des Fahrkorbs 4 auftreten, ist eine Bremsvorrichtung 14 in Form einer Fangvorrichtung vorgesehen. Zum hydraulischen Entlüften der Bremsvorrichtung 14 ist im vorliegenden Ausführungsbeispiel ein Hydraulikaggregat 16 vorgesehen.

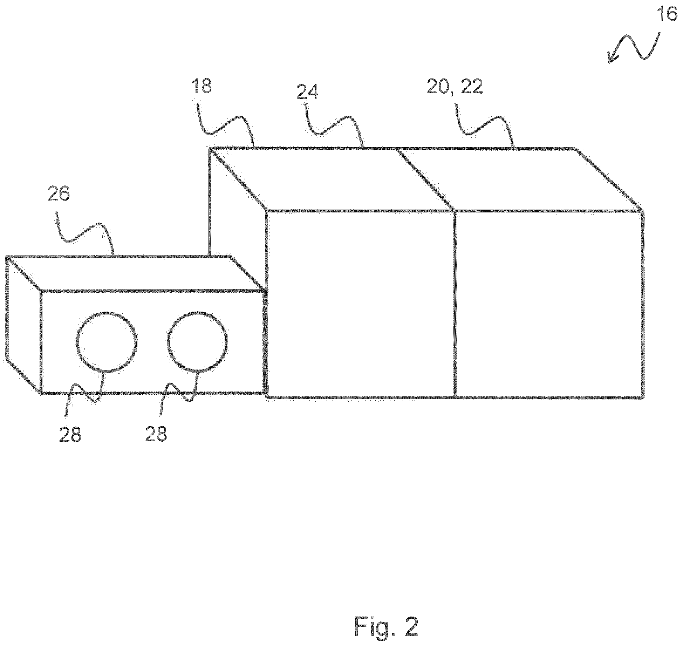

Figur 2 zeigt das Hydraulikaggregat 16 im Einzelnen.

Im vorliegenden Ausführungsbeispiel weist das Hydraulikaggregat 16 eine Pumpenbaugruppe 20, eine Bremszylinderbaugruppe 24 und eine Ventilbaugruppe 26 auf.

Die Pumpenbaugruppe 20, die Bremszylinderbaugruppe 24 und die Ventilbaugruppe 26 sind ein integriertes Bauteil bildend in einem gemeinsamen Gehäuse 18 aufgenommen. Im vorliegenden Ausführungsbeispiel ist das Gehäuse 18 ein Metallgehäuse. Das Gehäuse 18 kann auch ein Kunststoffspritzgussgehäuse sein.

Im vorliegenden Ausführungsbeispiel weist die Pumpenbaugruppe 20 eine Tauchpumpe 22 auf. Ferner weist die Ventilbaugruppe 26 zwei Ventile 28 auf, die - wie später noch erläutert wird - parallel geschaltet sind, um eine Redundanz bereitzustellen.

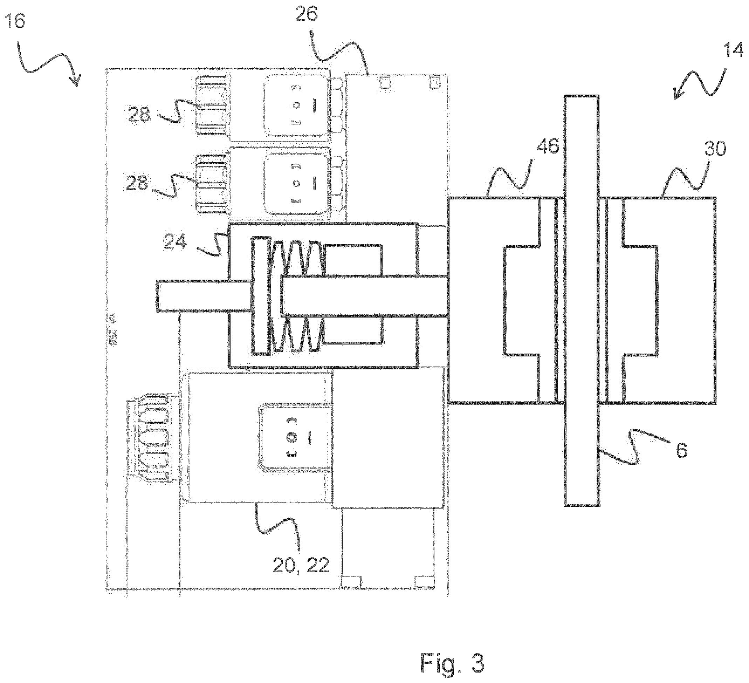

Figur 3 zeigt das Hydraulikaggregat 16 verbunden mit der Bremsvorrichtung 14. Hierbei ist das Hydraulikaggregat 16 direkt mit einem Grundkörper 46 der Bremsvorrichtung 14 verbunden. Im vorliegenden Ausführungsbeispiel weist die Bremsvorrichtung 14 eine an dem Grundkörper 46 befestigte Bremse 30 auf, die flach ausgebildete Bremsbeläge aufweist. Bei entlüfteter Bremse 30 liegen die Bremsbeläge an der Führungsschiene 6 an, um den Fahrkorb 4 abzubremsen.

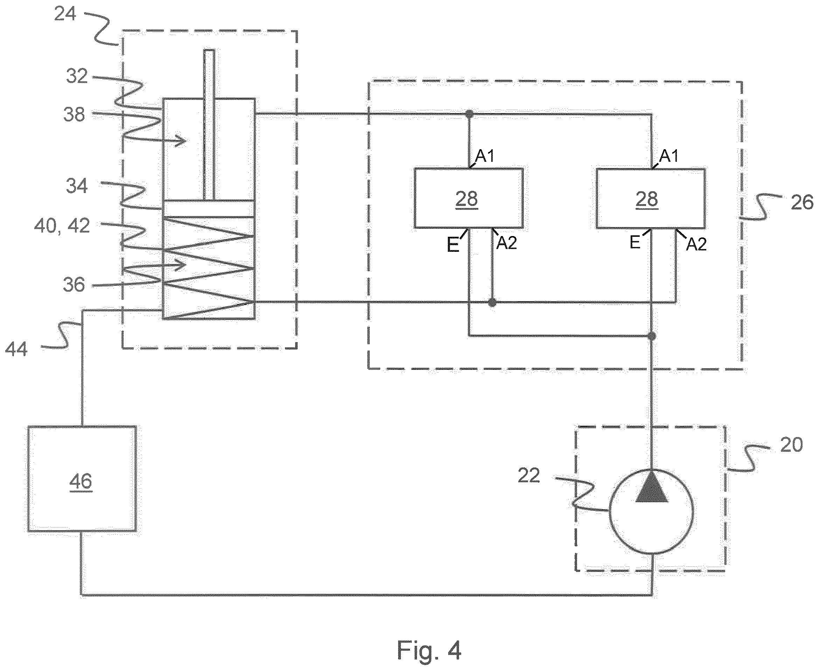

Figur 4 zeigt das Hydraulikaggregat mit einem geschlossenen Hydraulikkreislauf 44.

Der Hydraulikkreislauf 44 verbindet die Pumpenbaugruppe 20, die Bremszylinderbaugruppe 24 und die Ventilbaugruppe 26 hydraulikölführend miteinander.

Im vorliegenden Ausführungsbeispiel sind die beiden Ventile 28 der Ventilbaugruppe 26 als 3/2-Wegeventile ausgebildet.

Des Weiteren sind anhand der Figur 4 weitere Details der Bremszylinderbaugruppe 24 zu erkennen. Die Bremszylinderbaugruppe 24 weist einen in einem Zylinder 32 verfahrbaren Kolben 34 auf. Der Kolben 34 teilt einen Zylinderinnenraum des Zylinders 32 in eine erste Kammer 38 und eine zweite Kammer 36. Dabei ist der Kolben 34 federnd vorgespannt. Hierzu ist im Inneren des Kolbens 34 eine Feder 40 vorgesehen. Im vorliegenden Ausführungsbeispiel ist die Feder 40 ein Tellerfederpaket 42. Die Feder 40 bzw. das Tellerfederpaket 42 sind in der zweiten Kammer 36 aufgenommen.

Eingangsseitig (Eingang E) ist jedes der Ventile 28 der Ventilbaugruppe 26 mit der Pumpenbaugruppe 20 verbunden, während ein jeweils erster Ausgang der Ventile 28 hydraulikölführend mit der ersten Kammer 38 und ein jeweils zweiter Ausgang A2 der Ventile 28 mit der zweiten Kammer 36 hydraulikölführend verbunden ist.

Somit können die erste Kammer 38 und/oder die zweite Kammer 36 mit den beiden Ventilen 28 der Ventilbaugruppe 26 hydraulikölführend verbunden werden.

Ferner ist im vorliegenden Ausführungsbeispiel eine Sensorbaugruppe (nicht dargestellt) vorgesehen, mit der eine Bewegung des Kolbens 34 in dem Zylinder 32 erfasst werden kann, z.B. aufgrund eines Druckverlustes in dem Hydraulikkreislauf 44.

Die Pumpenbaugruppe 20 kann neben der im vorliegenden Ausführungsbeispiel vorgesehenen Tauchpumpe 22 ferner ein Rückschlagventil (nicht dargestellt) und/oder ein Überdruckventil (nicht dargestellt) aufweisen.

Im Normalbetrieb, d.h. bei nicht aktiver Bremseinrichtung 14, wird von der Pumpenbaugruppe 20 Hydrauliköl durch die sich in einem ersten Schaltzustand befindlichen Ventile 28 der Ventilbaugruppe 26 gepumpt, und in die erste Kammer 38 der Bremszylinderbaugruppe 24 gefördert. Dort bewirkt das unter Druck stehende Hydrauliköl eine Belüftung der Bremse 30. Zugleich weist die erste Kammer 38 im vorliegenden Ausführungsbeispiel zusätzlich die Funktion eines Speichers für das Hydrauliköl auf.

Wenn nun die Bremseinrichtung 14 aufgrund z.B. einer Übergeschwindigkeit der Fahrkorb 4 aktiviert wird, wechselt zumindest eines der beiden Ventile 28 vom seinem ersten Schaltzustand in seinem zweiten Schaltzustand. Nun trennt die Ventilbaugruppe 26 die erste Kammer 38 vom Hydraulikkreislauf 44. Somit steht nun in der ersten Kammer 38 keine der Federkraft der Feder 40 entgegenwirkende Kraft zur Verfügung, so dass sich die Feder 40 entspannt und die Bremse 30 der Bremsvorrichtung 14 nicht mehr entlüftet ist. Dabei ist dem ersten Schaltzustand ein erstes Steuersignal von z.B. 24 Volt und dem zweiten Schaltzustand ein zweites Steuersignal von z.B. 0 Volt zugeordnet.

Wenn hingegen nur eines der beiden Ventile 28 intakt ist, wirkt die Federkraft der Feder 40 in diesem Fall, so dass die Bremse 30 aktiviert ist, was eine Entlüftung der Bremse 30 bewirkt. Die Ventilgruppen 26 und somit das Hydraulikaggregat 16 weisen somit ein die Sicherheit des Systems steigernde Redundanz auf.

Hiervon abweichend kann die Bremszylinderbaugruppe 24 doppelt wirkend ausgebildet sein. Wenn nun beide Ventile 28 intakt sind, leitet die Ventilbaugruppe 26 im zweiten Schaltzustand das unter Druck stehende Hydrauliköl in die zweite Kammer 36 der Bremszylinderbaugruppe 24 und trennt zugleich die erste Kammer 38 vom Hydraulikkreislauf 44. Nun wirkt der nun in der zweiten Kammer 36 herrschende Hydrauliköldruck zusätzlich auf den Kolben 34, um die Bremsvorrichtung 14 aus dem entlüfteten Schaltzustand in den nicht-entlüfteten Schaltzustand zu bringen. Somit ist die Bremszylinderbaugruppe 24 doppelt wirkend ausgebildet.

Es wird durch die Bremszylinderbaugruppe 24 strömendes Hydrauliköl in einem Sammelbehälter 46 gesammelt und wieder der Pumpe 22 zugeführt. Abweichend vom vorliegenden Ausführungsbeispiel kann die erste Kammer 38 oder der Sammelbehälter 46 als Druckspeicher ausgebildet sein. Es wird dann ein Ventil (nicht dargestellt) geöffnet, dass zwischen der Bremszylinderbaugruppe 24 und dem Sammelbehälter 46 angeordnet ist.

Eine Inbetriebnahme des Aufzugs 2 nach einer Aktivierung der Bremseinrichtung 14 und einem Einsatz von Servicepersonal erfordert, dass die Pumpe 22 wieder einen notwendigen Betriebsdruck in dem Hydraulikkreislauf 44 aufbaut, um die Bremse 30 entlüften zu können.

### Bezugszeichenliste

- 2: Aufzug
- 4: Fahrkorb
- 6: Führungsschienen
- 8: Tragseil
- 10: Gegengewicht
- 12: Treibscheibe
- 14: Bremsvorrichtung
- 16: Hydraulikaggregat
- 18: Gehäuse
- 20: Pumpenbaugruppe
- 22: Tauchpumpe
- 24: Bremszylinderbaugruppe
- 26: Ventilbaugruppe
- 28: Ventil
- 30: Bremse
- 32: Zylinder
- 34: Kolben
- 36: zweite Kammer
- 38: erste Kammer
- 40: Feder
- 42: Tellerfederpaket
- 44: Hydraulikkreislauf
- 46: Grundkörper
- g: Schwerkraftrichtung
- E: Eingang erster Ausgang
- A2: zweiter Ausgang

## Patentansprüche

1. Aufzug (2) mit einer Bremsvorrichtung (14), nämlich einer Fangvorrichtung,
wobei die Bremsvorrichtung (14) eine hydraulisch wirkende Bremse (30) zum Abbremsen und/oder Halten eines Fahrkorbs (4) des Aufzugs (2) und ein Hydraulikaggregat (16) mit einer Pumpenbaugruppe (20), einer Bremszylinderbaugruppe (24) und einer Ventilbaugruppe (26) zum Belüften der Bremse (30) aufweist,
wobei das Hydraulikaggregat (16) an der Bremsvorrichtung (14) befestigt ist,
wobei die Bremszylinderbaugruppe (24) einen in einem Zylinder (32) verlagerbaren Kolben (34) aufweist, wobei der Kolben (34) mittels einer Feder (40) federnd vorgespannt ist,
wobei die Ventilbaugruppe (26) zumindest ein Ventil (28) aufweist,
wobei das Ventil (28) in zumindest einem ersten Schaltzustand die Bremse (30) belüftet, und
wobei der Kolben (34) einen Zylinderinnenraum des Zylinders (32) in eine erste Kammer (38) und eine zweite Kammer (36) teilt,
wobei in der zweiten Kammer (36) die Feder (40) aufgenommen ist und
wobei in dem ersten Schaltzustand des Ventils (28) die erste Kammer (38) des Zylinders (32) hydraulikölfördernd mit der Pumpenbaugruppe (20) verbunden ist,
**dadurch gekennzeichnet,**
**dass** in einem zweiten Schaltzustand des Ventils (28) die zweite Kammer (36) hydraulikölfördernd mit der Pumpenbaugruppe (20) verbunden ist.

2. Aufzug (2) nach Anspruch 1, wobei die Pumpenbaugruppe (20), die Bremszylinderbaugruppe (24) die Ventilbaugruppe (26) in einem gemeinsamen Gehäuse (18) aufgenommen sind.

3. Aufzug (2) nach Anspruch 1 oder 2, wobei die Bremsvorrichtung (14) einen Grundkörper (46) aufweist, und das Hydraulikaggregat (16) an dem Grundkörper (46) befestigt ist.

4. Aufzug (2) nach einem der vorstehenden Ansprüche, wobei die Pumpenbaugruppe (20) eine Tauchpume (22) aufweist.

5. Aufzug (2) nach einem der vorstehenden Ansprüche, wobei die Ventilbaugruppe (26) zumindest ein Ventil (28) aufweist, das als 3/2-Wegeventil ausgebildet ist.

6. Aufzug (2) nach einem der vorstehenden Ansprüche, wobei die Ventilbaugruppe (26) zumindest zwei Ventile (28) aufweist, die parallel geschaltet sind.

7. Aufzug (2) nach einem der vorstehenden Ansprüche, wobei das Hydraulikaggregat (16) einen geschlossenen Hydraulikölkreislauf (44) aufweist.

8. Aufzug (2) nach Anspruch 7, wobei der Hydraulikkreislauf (44) ausgebildet ist, aus dem Zylinder (32) der Bremszylinderbaugruppe (24) austretendes Hydrauliköl zu der Pumpenbaugruppe (20) zu leiten.

## Claims

1. Elevator (2) having a braking device (14), specifically a safety gear,
wherein the braking device (14) comprises a hydraulically acting brake (30) for braking and/or stopping an elevator car (4) of the elevator (2) and a hydraulic unit (16) having a pump assembly (20), a brake cylinder assembly (24) and a valve assembly (26) for ventilating the brake (30), wherein the hydraulic unit (16) is fastened to the braking device (14),
wherein the brake cylinder assembly (24) comprises a piston (34) which can be displaced in a cylinder (32),
wherein the piston (34) is prestressed in a sprung fashion by means of a spring (40),
wherein the valve assembly (26) comprises at least one valve (28),
wherein in at least one first switched state the valve (28) ventilates the brake (30), and
wherein the piston (34) divides a cylinder interior space of the cylinder (32) into a first chamber (38) and a second chamber (36),
wherein the spring (40) is accommodated in the second chamber (36), and
wherein in the first switched state of the valve (28) the first chamber (38) of the cylinder (32) is connected to the pump assembly (20) in such a way as to deliver hydraulic oil,
**characterized in that**
in a second switched state of the valve (28) the second chamber (36) is connected to the pump assembly (20) in such a way as to deliver hydraulic oil.

2. Elevator (2) according to Claim 1, wherein the pump assembly (20), the brake cylinder assembly (24) and the valve assembly (26) are accommodated in a common housing (18).

3. Elevator (2) according to Claim 1 or 2, wherein the braking device (14) comprises a base body (46), and the hydraulic unit (16) is fastened to the base body (46) .

4. Elevator (2) according to one of the preceding claims, wherein the pump assembly (20) comprises a submersible pump (22).

5. Elevator (2) according to one of the preceding claims, wherein the valve assembly (26) comprises at least one valve (28) which is designed as a 3/2-way valve.

6. Elevator (2) according to one of the preceding claims, wherein the valve assembly (26) comprises at least two valves (28) which are connected in parallel.

7. Elevator (2) according to one of the preceding claims, wherein the hydraulic unit (16) comprises a closed hydraulic oil circuit (44).

8. Elevator (2) according to Claim 7, wherein the hydraulic circuit (44) is designed to conduct hydraulic oil which escapes from the cylinder (32) of the brake cylinder assembly (24) to the pump assembly (20).

## Revendications

1. Ascenseur (2) comprenant un dispositif de freinage (14), à savoir un dispositif d'arrêt,
le dispositif de freinage (14) comportant un frein hydraulique (30) destiné à freiner et/ou maintenir une cabine (4) de l'ascenseur (2) et une unité hydraulique (16) munie d'un ensemble formant pompe (20), d'un ensemble formant cylindre de frein (24) et d'un ensemble formant vanne (26) destiné à ventiler le frein (30),
l'unité hydraulique (16) étant fixée au dispositif de freinage (14),
l'ensemble formant cylindre de frein (24) comportant un piston (34) déplaçable dans un cylindre (32), le piston (34) étant précontraint élastiquement par un ressort (40),
l'ensemble formant vanne (26) comportant au moins une vanne (28),
la vanne (28) ventilant le frein (30) dans au moins un premier état de commutation et
le piston (34) divisant un espace intérieur du cylindre (32) en une première chambre (38) et une deuxième chambre (36),
le ressort (40) étant logé dans la deuxième chambre (36) et
la première chambre (38) du cylindre (32) étant reliée hydrauliquement à l'ensemble formant pompe (20) dans le premier état de commutation de la vanne (28),
**caractérisé en ce que**
la deuxième chambre (36) est reliée, par transport d'huile hydraulique, à l'ensemble formant pompe (20) dans un deuxième état de commutation de la vanne (28).

2. Ascenseur (2) selon la revendication 1, l'ensemble formant pompe (20), l'ensemble formant cylindre de frein (24), l'ensemble formant vanne (26) étant reçus dans un boîtier commun (18).

3. Ascenseur (2) selon la revendication 1 ou 2, le dispositif de freinage (14) comportant un corps de base (46) et l'unité hydraulique (16) étant fixée au corps de base (46).

4. Ascenseur (2) selon l'une des revendications précédentes, l'ensemble formant pompe (20) comportant une pompe plongeante (22).

5. Ascenseur (2) selon l'une des revendications précédentes, l'ensemble formant vanne (26) comportant au moins une vanne (28) qui est conçue comme un distributeur à 3/2 voies.

6. Ascenseur (2) selon l'une des revendications précédentes, l'ensemble formant vanne (26) comportant au moins deux vannes (28) qui sont montées en parallèle.

7. Ascenseur (2) selon l'une des revendications précédentes, l'unité hydraulique (16) comportant un circuit d'huile hydraulique fermé (44).

8. Ascenseur (2) selon la revendication 7, le circuit hydraulique (44) étant conçu pour diriger l'huile hydraulique du cylindre (32) de l'ensemble formant cylindre de frein (24) vers l'ensemble formant pompe (20) .
